# EUROPEAN PATENT APPLICATION

(11) **EP 1 078 699 A1**
(43) Date of publication of application: **28.02.2001**
(21) Application number: 99919704.9
(22) Date of filing: 30.04.1999
(51) Int. Cl.: B09B 3/00, B03B 9/06, C04B 18/30

(54) **ECOLOGICAL MIXTURE FOR THE CONSTRUCTION INDUSTRY AND PROCESS FOR ELIMINATING WASTE MATERIALS**

(30) Priority: 11.05.1998 MX 9803707
(71) Applicant: De la Concha Estrada, Ernesto, Cuajimalpa, México D.F. 05100 (MX)
(72) Inventor: De la Concha Estrada, Ernesto, Cuajimalpa, México D.F. 05100 (MX)
(74) Representative: Flaccus, Rolf-Dieter, Dr.
(86) International application number: MX9900010
(87) International publication number: WO9958261

(57) **Abstract**

The present invention describes a method for eliminating trash comprising the steps of: transporting trash over a transporting device; selecting recyclable trash and rigid metals from non-recyclable trash; removing recyclable trash and rigid metals; feeding non-recyclable trash in a grinding device; grinding non-reciclable trash; mixing ground trash with other compounds; and forming a construction element. Furthermore, the present invention describes an ecological mixture for construction comprising: from about 5% to about 50% of cement; from 0% to about 40% of sand; from 0% to about 40% of gravel; from about 30% to about 95% of ground trash; and water as needed to make the ecological mixture for construction.

## Description

### FIELD OF THE INVENTION

The present invention relates to the construction and waste management industry, and more particularly, the present invention relates to an ecological mixture for construction and to a method for disposing great amounts of trash and industrial and home waste.

### BACKGROUND OF THE INVENTION

Today, thousands of tons of both organic and inorganic trash and waste are daily generated, coming from homes and all type of industries and services, which, at a very low percentage can be recycled or reused, without solving the pollution problem generating all the other unrecoverable trash and waste.

The environmental pollution is constant, since the way of storing all trash and waste, is conforming waste mountains which suffer fermentation and decomposition stages, causing odors and toxic particles in the air, which are harmful to the health. On the other hand, all waste when being piled and receiving water through rain, work as a filter polluting filtering water an in turn the earth, sometimes polluting the water, It should also be considered the great surface extension required to store a great amount of trash generated in the big cities, such as, for example, Mexico City, and besides other environmental problems causing trash in the world environment.

In the state of the art there are several approaches to solve the trash problem, as well as its possible reutilization in the industry, one of them is mentioned in the U.S. patent No. 5,687,918, issued to Tohoru Kubota et. al on November 18, 1997, which describes a trash remover to decompose trash with microorganisms. The trash remover has a tank containing a trash mixture, means having microorganisms, stirring means to stir the mixture within the tank in order to supply air to the mixture, and controlling means to control the percentage of the mixture water content. The controlling means control any of the mixture stirring and/or the mixture temperature and/or the volume of air blown over the mixture to maintain the percentage of water content at an suitable value, to which organisms are active and the mean lifetime is prolonged. This document presents the withdrawal of not been useful with trash and waste which cannot be decomposed through microorganisms, that is, non-biodegradable trash, such as disposable diapers, bottles and plastic products, etc.

On the other hand, the US patent 3,706,662, issued to Walker L. Wilford, Jr., on December 19, 1972, describes an reducer and non-polluting method to reduce waste comprising an apparatus to heat and decompose industrial, commercial and home organic and inorganic waste, to rapidly and economically reduce its volume without thus polluting the air. The device comprises a housing with a removable cover to insert waste within the housing. Heating of waste is carried out by igniting a burning system arranged inside the housing, which combines hydrogen and oxygen gases and applies heat generated by its combustion directly to the wasted material. The hydrocarbon gases, along the water steam resulting from the hydrogen and oxygen combustion and those from the waste material decomposition, are collected and condensed to avoid air pollution. The housing has, furthermore, a grid to collect any solid residue which does not vaporize during the heating process and which falls through the grid to a housing base portion. These solid materials are periodically removed from the system and are used whether for commercial purposes or are disposed. The solution to the trash problem suggested here is to reduce the trash volume, since the solid residues which are not vaporized with this system have to be conventionally disposed and cannot be reused as subproducts in any final product which can be useful to the human being.

Other approaches of the state of the art to reduce the waste volume are described in: US patent No. 5,377,921, issued to Heinz Wirth, on January 3, 1995, titled 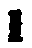 Procedure and device for treating waste materials 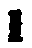 , which consists of a apparatus to treat waste material including a hopper having an exit on the lower part thereof; a crushing device bound to the hopper to receive the waste material from the hopper; a chamber having an upper portion and a lower portion; and an elevator device having an entry and an exit; US patent No. 5,125,590, issued to Narao Shinya, on July 14, 1995, titled 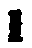 Trash Disposal 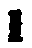 , describes a trash disposal pulverizing kitchen trash, it dries it and only discharges water produced towards a sewage system, while dry trash or waste is collected in a bag; US patent No. 5,577,673, issued to David L. McMurphy et. al, on November 26, 1996, titled 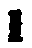 Deodorized trash disposal system 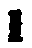 , which describes a deodorizing apparatus for an electric grinding type waste disposal system automatically injecting a deodorizing agent spraying. However, the above mentioned efforts of the previous art have focused mainly on the reduction of industrial, commercial and home organic and inorganic waste. However, a subproduct which can be reused by the industry is not generated.

On the other hand, the construction industry has focused part of its efforts to reuse part of the waste generated during the building demolition and thus avoid greater waste and trash generation, contributing to the contamination reduction for solid waste. One of these efforts is described on US patent No. 5,725,655, issued to Robert L. Catterton et. al, on March 10, 1998, titled 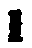 Method for new concrete from old concrete 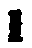 , which refers to a method to elaborate a concrete mixture for mixing new cement with concrete recycled material. This new procedure allows concrete wasted material to be reused as a valuable product.

Also, US patent No. 5,525,153, issued to Michael Cosola, on June 11, 1996, describes a mixed cement product for commercial or home use, which is premixed and prepackaged, incorporating demolition and construction waste recycled instead of virgin rock.

On the other hand, US patent No. 3,734,988, issued to Avedis A. Aintablain, on May 22, 1973, titled 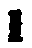 Use of waste produced on decomposition to elaborate construction products 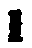 , describes a process to convert municipal waste into products capable of being used such as construction blocks, pressed fiber sheets or gypsum board, building bricks, consisting of stages for reducing the waste size to a gravel or chip size by crushing; decomposing the waste in the presence of nitrogen, water and air; drying the chemically processed material in a gas dryer to make it biologically inert; grinding the dry material to a fine powder; mixing the powder with charging and binding material such as hydraulic setting cement and glue; adding water and other chemical agents as required; forming block or other construction material by pressing; and curing the product until achieving a specific resistance. However, Aintablain patent would be useful for town or small cities where the industrial commercial and home organic and inorganic waste generation is less. This document of the state of the art presents the inconvenience that the crushed waste material has to be conditioned 3 to 7 days in a conditioning tank, which is inoperable in big cities due to thousands of tons of waste generated every day, for example, in Mexico City thousands of tons of waste are daily generated, which would result in the design of an extremely bulky and expensive conditioning tank, which would require a great economic investment and space for its construction. However, the trash and waste volume generated by the construction industry is minimum in comparison to the trash generation in general.

Therefore, considering all the previous art defects, an object of the present invention is to provide an ecological mixture for construction using as a constituent all organic and inorganic waste from trash, with the exception of high hardness metals.

Another object of the present invention is to provide an ecological mixture for construction which is lighter and less expensive, but with the same efficiency and resistance than the existing concrete mixtures.

A further object of the present invention is to provide an ecological mixture which can be used to elaborate several elements of the construction industry.

Still another object of the present invention is to provide an ecological mixture for construction which solves the organic and/or inorganic, recyclable or non-recyclable trash or waste problem.

Still another object of the present invention is to provide a method to eliminate organic and/or inorganic, recyclable or non-recyclable trash or waste, simple but efficient to eliminate the problem associated with trash storing.

### SUMMARY OF THE INVENTION

The present invention relates to an ecological mixture for construction and a method for eliminating waste, which comprises first submitting trash to a transporting stage to select recyclable or non-recyclable trash, further eliminate rigid metals. Once the trash has been classified, non-recyclable trash can follow its passage and be fed in grinding devices, where non-recyclable trash is submitted to a grinding process to form a rice-size ground matter.

The primary purpose of the method according to the present invention is to reduce the trash volume to 80%, as well as preparing the ground trash to its elimination using it as a compound which in combination with others, will form an ecological mixture which will be used for building borders, sidewalks, avenues, contention walls or concrete plates for provisional divisions of roads, for filling and leveling crockery and light constructions or buildings, for manufacturing blocks, bricks, posts, etc.

### DETAILED DESCRIPTION OF AN EMBODIMENT OF THE INVENTION

The present invention relates to an ecological mixture comprising trash as a constituent thereof, an a method to eliminate waste or trash. As is used herein, the terms 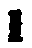 trash 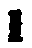 and 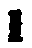 waste 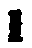 are indifferently used and mean any kind of industrial, commercial or home organic or inorganic, recyclable or non-recyclable waste or trash.

The inorganic type trash used in the ecological mixture of the present invention can be, for example, products made from glass, products made from plastic and its derivatives, laminated material, diapers, wood, paper, burlap, asbestos, aluminum, non-rigid metals, etc. The organic type trash which can be employed in the ecological mixture of the present invention can be selected from the group consisting of for example, grass, dead animals, plants, fruit, bones, food residues, etc.

Trash is classified in recyclable and non-recyclable. As it is used herein, the term 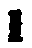 recyclable 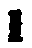 means that trash is of composition generally identifiable and whose matter is capable of being repeatedly submitted to the same cycle or process to enlarge or increase the effects of the same. The term 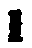 non-recyclable 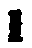 , as used herein, means that trash is not of identifiable composition and, therefore, matter is not submitted to any process for its transformation, being non-useful and, accordingly, wasted after being used once.

The method for eliminating trash according to the present invention first is submitted to a trash transportation stage over endless bands, where trash is submitted to a recyclable or non-recyclable trash selection procedure, besides eliminating rigid metals. For this purpose, there are people dedicated to the selection located at the sides of the bands, across the passage thereof, where they remove recyclable trash and rigid metals, allowing non-recyclable trash to follow its passage through an endless band. After recyclable trash and rigid metals have been separated, non-recyclable trash continues its passage over the band and is fed in grinding mills arranged an the back of the band. Non-recyclable trash is submitted to a grinding process precisely in mills in order to form a rice-size ground matter, approximately.

This method has as a result to reduce the trash volume to 80%, as well as prepare the ground trash for its elimination using it as a compound which in combination with others, will form an ecological mixture which will be used for building borders, sidewalks, avenues, contention walls or concrete plates for provisional divisions of roads, for filling and leveling, crockery and light constructions or buildings, for manufacturing blocks, bricks, posts, etc. The other compounds are selected from the group consisting of cement, sand, gravel, water, additives, stone, pigments. In this respect, the ground trash odor is eliminated when is mixed with other compounds to form the solidified construction final element.

The object of separating rigid metals, such as piping chips, plates, rods, big bolts, etc., is to avoid damaging the blades of the mills. In this sense, suitable mills in the present invention can be selected by those skilled in the grinding art.

Ground trash which is employed to make the ecological mixture according to the present invention, can be made up of organic and/or inorganic, recyclable or non-recyclable, single type or several types trash. That is, ground trash can comprise, for example, plants, diapers, aluminum, fruit, plastic, etc., or it can only comprise plastic and plants.

Accordingly, the ecological mixture according to the present invention, however, has to be interpreted as illustrative and not a limitation, since its composition can be varied depending on the specific type of application to be produced. Th present invention uses compounds constituting concrete compositions usually employed in construction. Thus, one preferred embodiment of the ecological mixture for construction according to the present invention comprises: from about 5% to about 50% of cement; from 0% to about 40% of sand; from 0% to about 40% of gravel; from about 30% to about 95% of ground trash; and water as needed to make the ecological mixture for construction. Preferably, the ecological mixture for construction comprises: from about 10% to about 25% of cement, from 0% to about 30% of sand; from 0% to about 30% of gravel; from about 30% to about 90% of ground trash; an water as needed to make the ecological mixture for construction.

In another embodiment of the ecological mixture for construction according to the present invention, it can be made only of cement, ground trash and water, for use in such applications which do not require great amounts of charge and effort such as borders, sidewalks, avenues, etc.

While an specific way of carrying out the present invention has been shown and described in detail by way of example, it should be understood that the present is susceptible to several modifications and alternate forms, without departing from the spirit and scope of the present invention. Therefore, the invention shall not be limited to the particular described form, but instead it shall cover all modifications, equivalents or alternatives which fall within the scope of the invention as it is claimed by the appended claims.

## Claims

1. A method for eliminating trash, characterized in that it comprises the steps of:
transporting trash over a transporting device;
selecting recyclable trash and rigid metals from non-recyclable trash;
removing recyclable trash and rigid metals;
feeding non-recyclable trash in a grinding device;
mixing ground trash with other compounds; and
forming a construction element.

2. The method for eliminating trash according to claim 1, wherein the transporting device is an endless band.

3. The method for eliminating trash according claim 1, wherein the ground trash size is rice-sized, approximately.

4. The method for eliminating trash according to claim 1, wherein before the step of forming the construction element the trash volume is reduced to 80%.

5. The method for eliminating trash according to claim 1, wherein the other compounds which are mixed with the ground trash are selected from the group consisting of cement, sand, gravel, water, additives, stone and pigments.

6. The method for eliminating trash according to claim 1, wherein the construction element can be borders, sidewalks, avenues, contention walls or concrete plates for provisional divisions of roads, for filling and leveling, crockery and light constructions or buildings, for manufacturing blocks, bricks, posts.

7. The method for eliminating trash according to claim 1, wherein the ground trash odor is eliminated when is mixed with other compounds to form the solidified construction element.

8. An ecological mixture for construction characterized in that comprises: from about 5% to about 50% of cement; from 0% to about 40% of sand; from 0% to about 40% of gravel; from about 30% to about 95% of ground trash; and water as needed to make the ecological mixture for construction.

9. An ecological mixture for construction according to claim 8, characterized in that the ecological mixture comprises: from about 10% to about 25% of cement; from 0% to about 30% of sand from 0% to about 30% of gravel; from about 30% to about 90% of ground trash; and water as needed to make the ecological mixture for construction.

10. An ecological mixture for construction according to claim 9, wherein the ecological mixture comprises only cement, ground trash and water, for applications which do not require great controls of charge and effort.

11. An ecological mixture for construction according to claim 9, wherein the construction element formed can be borders, sidewalks, avenues, contention walls or concrete plates for provisional divisions of roads, for filling and leveling, crockery and light constructions or buildings, for manufacturing blocks, bricks, posts.
